# EUROPÄISCHE PATENTSCHRIFT

(11) **EP 1 048 419 B1**
(45) Veröffentlichungstag und Bekanntmachung des Hinweises auf die Patenterteilung: **15.12.2004**
(21) Anmeldenummer: 00810214.7
(22) Anmeldetag: 14.03.2000
(51) Int. Cl.: B26F 1/24

(54) **Vorrichtung zum Lochen und Verformen eines Flächengebildes**
Apparatus for perforating and permanently deforming a flat product
Dispositif pour la perforation et la déformation permanente d'un produit plat

(30) Priorität: 22.04.1999 EP 99810336
(43) Veröffentlichungstag der Anmeldung: 02.11.2000
(73) Patentinhaber: Christoph Burckhardt AG, 4019 Basel (CH)
(72) Erfinder: Burckhardt, Christoph, CH-4144 -Arlesheim (CH); Ulmer, Christoph, CH-4054 Basel (CH); Plüss, Markus, CH-4102 Binningen (CH); Wisson, Francis, F-68300 St. Louis (FR); Jöhl, Bruno, CH-5022 Rombach (CH)
(74) Vertreter: Bollhalder, Renato

(56) Entgegenhaltungen:
- EP-A- 0 020 083
- EP-A- 0 214 608
- DE-A- 2 204 855
- GB-A- 423 828
- GB-A- 484 929
- US-A- 1 938 318
- US-A- 3 719 736

## Beschreibung

Die vorliegende Erfindung bezieht sich auf eine Vorrichtung zum Lochen und Verformen eines Flächengebildes, mit einem eine Vielzahl von Perforiervorsprüngen aufweisenden Perforierelement und einem Gegenelement, das eine Vielzahl von Löchern zur Aufnahme von Perforiervorsprüngen des Perforierelements aufweist, so dass während des Lochens und Verformens jeder Perforiervorsprung im Loch- und Verformbereich in ein Loch des Gegenelements eintaucht.

Unter einem solchen Flächengebilde wird hier einerseits ein flächiges, biegbares Gut verstanden, wie beispielsweise eine Kunststofffolie, z.B. aus Polyäthylen, ein Blatt Papier oder Vliesstoff, der auch einige Milimeter dick sein kann. Anderseits sind damit auch starre Platten gemeint. Perforierte Kunststofffolien, bei denen die Lochränder eine bestimmte dreidimensionale Form aufweisen, werden etwa zur Herstellung von Babywindeln verwendet. Bis anhin ist es aber nicht gelungen, in einem Schritt die Kunststofffolien zu lochen und den Lochrändern die gewünschte Form zu geben.

Es ist beispielsweise aus der FR-A-1 417 619 bekannt, Kunststofffolien durch Durchführen zwischen einer eine Vielzahl von Nadeln aufweisenden Nadelwalze und einer Gegenwalze mit einer glatten Oberfläche zu lochen. Die dabei entstehenden Lochränder weisen aber keine regelmässige dreidimensionale Form auf, da die glatte Oberfläche der Gegenwalze dem Ausstülpen von Lochrändern entgegenwirkt.

Anstelle von Gegenwalzen mit glatter Oberfläche wurden daher auch schon Gegenwalzen eingesetzt, die mit in Walzenrotationsrichtung durchgehenden Rillen versehen sind, in die die Nadeln der Nadelwalze während des Lochens eintauchen können, wie dies in der US-A-2 748 863 beschrieben ist. In den Kunststofffolien entstehen dann Löcher mit teilweise dreidimensionalen Lochrändern, die aber für gewisse Anwendungen keine ideale und insbesondere keine genau definierte Form haben.

Andererseits ist es zum Beispiel aus der EP-A-0 020 083 bekannt, als Perforierelement eine Zackenwalze mit Zacken als Perforiervorsprünge zu verwenden, die während des Lochens und Verformens im Loch- und Verformbereich in komplementär geformte Löcher des Gegenelements eintauchen. Derartige Zacken sind aber insofern nicht mit Nadeln vergleichbar, als ihre ganze Oberfläche zur Verformung eingesetzt wird und daher am Flächengebilde anders geformte Lochränder entstehen. Insbesondere geht eine Zacke am Zackenansatz am Walzengründkörper direkt in eine weitere Zacke über, so dass am Flächengebilde jeweils ein Loch unmittelbar auf das vorhergehende folgt. Ausserdem wird das Flächengebilde durch das Gegenelement bis an den Grundkörper der Zackenwalze gedrückt. Im weiteren wird das ganze Flächengebilde erhitzt, wenn mit erhitzten Zacken gelocht und verformt wird.

In der EP-A-0 214 608 ist eine Vorrichtung zum Lochen und Verformen eines Flächengebildes offenbart, die ein eine Vielzahl von Nadeln aufweisendes Nadelelement und ein Gegenelement umfasst, das eine Vielzahl von Löchern zur Aufnahme von Nadeln des Nadelelements aufweist, so dass während des Lochens und Verformens jede Nadel im Loch- und Verformbereich in ein Loch des Gegenelements eintaucht. Jede Nadel weist einen Formbereich mit einer Umfangsfläche auf, zwischen der und der zu ihr benachbarten Innenfläche des jeweiligen Lochs des Gegenelements der während des Lochens und Verformens des Flächengebildes entstehende Lochrand am Flächengebilde in kontrollierter Weise geformt wird. Die Form der entstehenden Lochränder ist aber nicht für alle Anwendungen ideal.

Angesichts der Nachteile der bisher bekannten, oben beschriebenen Vorrichtungen liegt der Erfindung die folgende Aufgabe zugrunde. Zu schaffen ist eine Vorrichtung zum Lochen und Verformen eines Flächengebildes der eingangs erwähnten Art, mit der beim Lochen des Flächengebildes die Lochränder kontrolliert zu einer alternativen dreidimensionalen Form geformt werden, wobei jeweils nicht die ganzen Perforiervorsprünge mit dem Flächengebilde in Kontakt kommen sollen.

Diese Aufgabe wird durch die erfindungsgemässe Vorrichtung gelöst, wie sie im unabhängigen Patentanspruch 1 definiert ist. In Patentanspruch 15 ist ein erfindungsgemässes Verfahren zum Lochen und Verformen eines Flächengebildes mit einer derartigen Vorrichtung definiert. Bevorzugte Ausführungsvarianten ergeben sich aus den abhängigen Patentansprüchen.

Das Wesen der Erfindung besteht im Folgenden: Eine Vorrichtung zum Lochen und Verformen eines Flächengebildes umfasst ein eine Vielzahl von Nadeln aufweisendes Nadelelement und ein Gegenelement, das eine Vielzahl von Löchern zur Aufnahme von Nadeln des Nadelelements aufweist, so dass während des Lochens und Verformens jeder Perforiervorsprung im Loch- und Verformbereich in ein Loch des Gegenelements eintaucht. Jede Nadel weist einen Formbereich mit einer Umfangsfläche auf, zwischen der und der zu ihr benachbarten Innenfläche des jeweiligen Lochs des Gegenelements der während des Lochens und Verformens des Flächengebildes entstehende Lochrand am Flächengebilde in kontrollierter Weise geformt wird. Die Vorrichtung ist dadurch gekennzeichnet, dass die Löcher sich zumindest bis zu einer gewissen Tiefe von ihrer Mündung her zum Innern des Gegenelements hin zumindest annähernd konisch verjüngen.

Dadurch, dass die Perforiervorsprünge Nadeln sind, welche per Definition einen Schaft und eine Spitze aufweisen, und die Nadeln einen bestimmten Formbereich aufweisen, tritt beim Lochen des Flächengebildes nicht der ganze Perforiervorsprung mit dem Flächengebilde in Kontakt. Insbesondere wird das flächengebilde durch das Gegenelement nicht bis an den Grundkörper des Nadelelements gedrückt, so dass bei erhitztem Nadelelements nicht das ganze Flächengebilde erhitzt wird. Ausserdem können mit Nadeln eine beliebige Verteilung der Löcher und eine grössere Anzahl unterschiedlicher Formen der Lochränder erzeugt werden, da beispielsweise bei einem Nadelelement und einem Gegenelement in Form von Walzen weniger Einschränkungen bezüglich des Ineinandergreifens der Walzen bestehen als bei sich aufeinander abwälzenden Zackenwalzen. Durch den Formbereich jeder Nadel, der eine Umfangsfläche aufweist, zwischen der und der zu ihr benachbarten Innenfläche des jeweiligen Lochs des Gegenelements der während des Lochens und Verformens des Flächengebildes entstehende Lochrand am Flächengebilde in kontrollierter Weise geformt wird, wird das Flächengebilde mit Löchern mit regelmässigen, relativ genau geformten dreidimensignalen Lochrändern versehen.

Je nach Flächengebilde, beispielsweise bei Kunststofffolien, erfolgt das Lochen und Verformen bei erhöhter Temperatur, wobei bei den heute gebräuchlichen Folien zum Teil Temperaturen bis ca. 450°C verwendet werden. Beim Erhitzen des Nadelelements und des Gegenelements dehnen sich diese aufgrund Ihrer normalerweise unterschiedlichen Beschaffenheit unterschiedlich stark, was berücksichtigt werden muss, damit bei der erhöhten Temperatur die Nadeln in die Löcher passen. Bei einer Vorrichtung zum Lochen und Verformen eines Flächengebildes bei erhöhter Temperatur sind das Nadelelement und das Gegenelement daher derart ausgebildet und gelagert, dass nach deren Erhitzen auf die zum Lochen und Verformen des Flächengebildes benötigte Temperatur während des Lochens und Verformens jede Nadel im Loch- und Verformbereich in ein Loch des Gegenelements eintaucht. Im kalten Stadium brauchen das Nadelelement und das Gegenelement nicht aufeinander zu passen.

Mit Vorteil ist die erfindungsgemässe Vorrichtung so ausgebildet, dass das Flächengebilde während des Lochens und Verformens am Gegenelement anliegt, und ein die Nadeln tragender Grundkörper des Nadelelements derart vom Gegenelement beabstandet ist, dass der Grundkörper während des Lochens und Verformens vom Flächengebilde beabstandet ist. Dadurch wird ein Erhitzen des ganzen Flächengebildes bei erhitztem Nadelelement durch das dazwischenliegende Luftpolster verhindert bzw. zumindest stark eingeschränkt.

Bei einer bevorzugten Ausführungsvariante der erfindungsgemässen Vorrichtung weisen die Nadeln einen im wesentlichen zylinderförmigen Schaft und eine kegelförmige oder konvex geformte Spitze auf und sind vorzugsweise rotationssymmetrisch. Der vorderste Teil der Spitze der Nadeln kann ausserdem bei gewissen Ausführungsvarianten flachgeschliffen oder flachgeschliffen und trovalisiert sein. Dank solch spezieller Nadelformen kann die Geschwindigkeit und Präzision des Lochens und Verformens erhöht werden.

Vorzugsweise sind Mittel zum Heizen der Nadeln vorhanden, beispielsweise eine Induktionsheizung oder andere handelsübliche elektrische Heizelemente, die im Grundkörper des Nadelelements angeordnet sein können. Durch das Heizen der Nadeln kann das Lochen und Verformen insbesondere von thermoplastischem Material unterstützt werden.

Im folgenden wird die erfindungsgemässe Vorrichtung unter Bezugnahme auf die beigefügten Zeichnungen anhand von Ausführungsbeispielen detaillierter beschrieben. Es zeigen:
- Fig. 1 -: eine Perspektivansicht eines ersten Ausführungsbeispiels der erfindungsgemässen Vorrichtung mit einer Nadelwalze und einer Lochwalze während des Lochens und Verformens eines Flächengebildes;
- Fig. 2 -: eine schematische Darstellung des Lochens und Verformens des Flächengebildes mit der Vorrichtung von Fig. 1;
- Fig. 3 -: eine stark vergrösserte, teilweise schematische, ausschnittsweise Schnittansicht der Nadelwalze und der Lochwalze während des Lochens und Verformens des Flächengebildes;
- Fig. 4 -: einen Teil des gelochten und verformten Flächengebildes in einer geschnittenen Perspektivansicht;

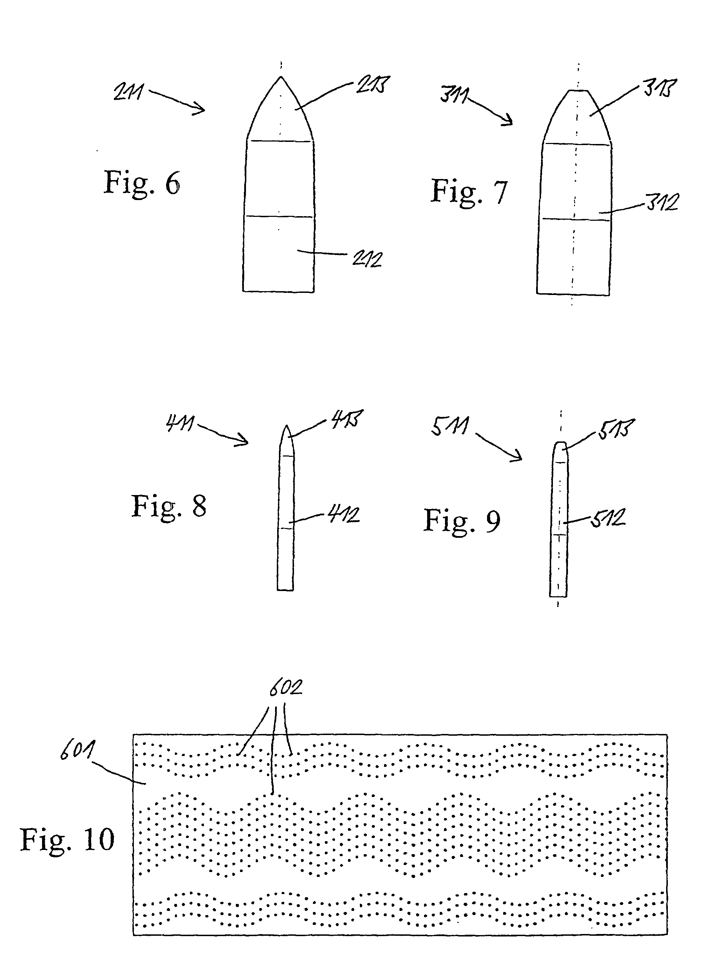

- Fig. 5 -: eine geschnittene Perspektivansicht eines zweiten Ausführungsbeispiels der erfindungsgemässen Vorrichtung mit einer Nadelplatte und einer Lochplatte;
- Fig. 6 -: ein Ausführungsbeispiel einer relativ dicken Nadel mit konvex geformter Spitze;
- Fig. 7 -: ein Ausführungsbeispiel einer relativ dicken Nadel mit konvex geformter, flachgeschliffener Spitze;
- Fig. 8 -: ein Ausführungsbeispiel einer relativ dünnen Nadel mit konvex geformter Spitze;
- Fig. 9 -: ein Ausführungsbeispiel einer relativ dünnen Nadel mit konvex geformter, flachgeschliffener Spitze; und
- Fig. 10 -: eine abgewickelte Oberfläche eines Zylinderkörpers einer Nadelwalze mit einer Nadelanordnung, wie sie beispielsweise zum Lochen und Verformen von Vliesstoffen für Slipeinlagen verwendet wird.

### Figuren 1 und 2

Das dargestellte erste Ausführungsbeispiel einer erfindungsgemässen Vorrichtung zum Lochen und Verformen eines Flächengebildes 3 umfasst im wesentlichen eine Nadelwalze 1 mit einer Vielzahl von regelmässig angeordneten Nadeln 11 und eine Lochwalze 2 mit einer Vielzahl von regelmässig angeordneten Löchern 21, derart, dass während des Lochens und Verformens jede Nadel 11 im Loch- und Verformbereich in ein Loch 21 der Lochwalze 2 eintaucht. Die Nadelwalze 1 und die Lochwalze 2 sind an einem Gestell 4 rotierbar gelagert, wobei die Nadelwalze 1 über zwei Verstellräder 5 höhenverstellbar ist, so dass der Abstand der Nadelwalze 1 von der Lochwalze 2 und somit der Abstand der Nadelwalze 1 vom Flächengebilde 3 und die Tiefe des Eindringens der Nadeln 11 in die Löcher 21 einstellbar ist. Ein Elektromotor 6 dient zum synchronen Antreiben der Nadelwalze 1 und der Lochwalze 2.

Das Flächengebilde 3 wird vorzugsweise von einer vorhergehenden Station einer Fertigungsstrasse her kommend über eine Umlenkrolle 7 zwischen der Nadelwalze 1 und der Lochwalze 2 hindurch über die Lochwalze 2 geführt und nachher einer nächsten Station zugeführt. Es ist über die Lochwalze 2 gespannt, was ein genaues Perforieren ermöglicht, und schliesst im vorliegenden Beispiel beidseits der Lochwalze 2 mit der Horizontalen einen Winkel α ein.

Nadelwalzen 1 und Lochwalzen 2 können je nach Einsatzgebiet verschiedene Grössen aufweisen und mit unterschiedlichen Anzahlen von Nadeln 11 bzw. Löchern 21 versehen sein. Verwendet werden beispielsweise Walzen 1, 2 mit einer Breite von ca. 3,2 m mit ungefähr 100'000 Nadeln 11 bzw. Löchern 21.

Bei gewissen Flächengebilden 3, insbesondere bei Kunststofffolien, erfolgt das Lochen und Verformen bei erhöhter Temperatur, z.B. durch eine beheizte Nadelwalze 1, wobei bei den heute gebräuchlichen Folien zum Teil Temperaturen bis ca. 450°C verwendet werden. Die unterschiedliche Dehnung der Nadelwalze 1 und der Lochwalze 2 aufgrund Ihrer normalerweise unterschiedlichen Beschaffenheit muss in diesem Fall bei der Ausbildung und Anordnung der Walzen 1, 2 berücksichtigt werden, damit bei der erhöhten Temperatur die Nadeln 11 in die Löcher 21 passen. Ein Walzenpaar 1, 2 ist somit im Normalfall für bestimmte Temperaturbereiche ausgelegt.

### Figur 3

Es ist hier ersichtlich, dass die Nadelwalze 1 einen Zylinderkörper 12 umfasst, in dem die Nadeln 11 verankert, beispielsweise eingegossen, sind. Der Zylinderkörper 12 ist vorzugsweise aus Metall, z.B. aus Messing oder Stahl, während die Nadeln 11 vorzugsweise aus gehärtetem Stahl bestehen. Die Lochwalze 2 ist mit Vorteil ganz oder zumindest in ihren äusseren Bereichen aus Gummi oder Metall, worin Löcher 21 ausgebildet sind, die sich bis fast ganz nach unten von ihrer Mündung her zum Innern der Lochwalze 2 hin konisch verjüngen. Die Nadeln 11 verjüngen sich etwa ab der Nadelmitte zur Spitze hin ebenfalls konisch und in diesem Bereich, der als Formbereich dient, ist ihre Umfangsfläche ungefähr parallel zur Innenfläche des jeweiligen Lochs 21, in das sie während des Lochens und Verformens eingeführt sind.

Zum Lochen und Verformen des Flächengebildes 3 wird dieses in Pfeilrichtung zwischen der Nadelwalze 1 und der Lochwalze 2 durchgeführt, während die beiden Walzen 1, 2 in Pfeilrichtung rotieren. Die Nadeln 11 perforieren dabei das Flächengebilde 3 und formen die Ränder der entstehenden Löcher 31 zwischen den ungefähr parallelen Bereichen der Nadeln 11 und der Löcher 21 der Lochwalze 2 in einer kontrollierten Weise dreidimensional.

Deutlich erkennbar ist ausserdem der Abstand zwischen dem Zylinderkörper 12 der Nadelwalze 1 und dem Flächengebilde 3, der ein Erhitzen der Nadelwalze 1 und der Nadeln 11 ermöglicht, ohne dass das ganze Flächengebilde 3 erhitzt wird.

### Figur 4

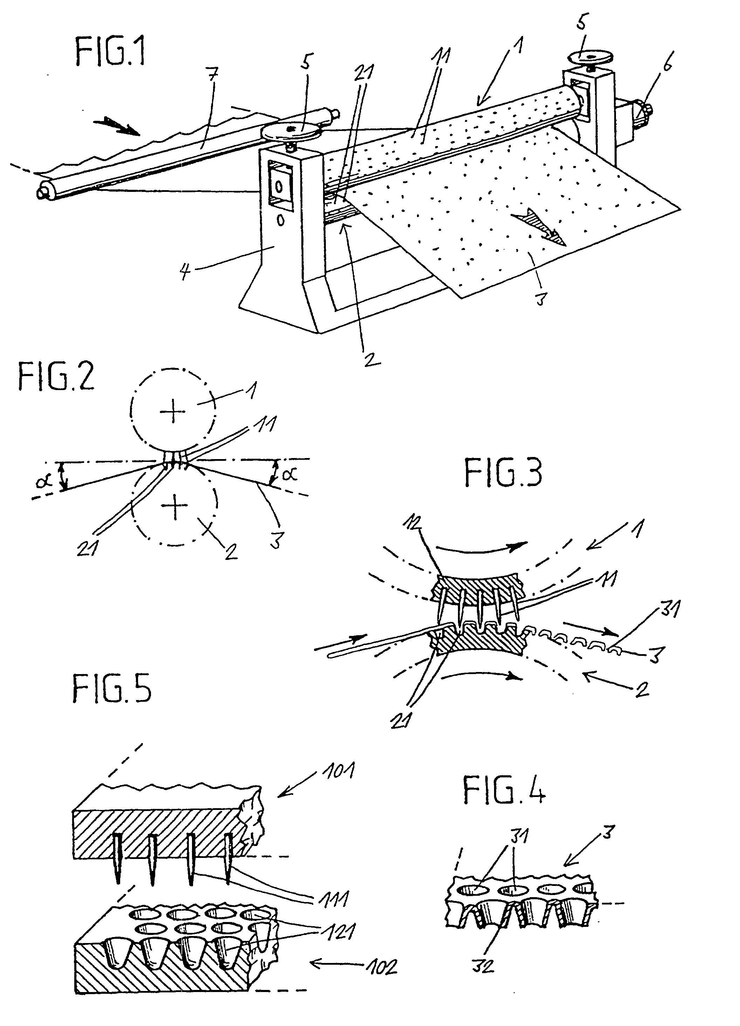

Durch das Lochen und Verformen eines ebenen Flächengebildes 3 mittels der erfindungsgemässen Vorrichtung der Fig. 1 bis 3 erhält man das dargestellte gelochte und verformte Flächengebilde 3, das gleichmässig verteilte Löcher 31 mit im Vergleich zum Stand der Technik regelmässiger geformten konischen Lochrändern 32 aufweist.

### Figur 5

Das gelochte und verformte Flächengebilde 3 von Fig. 4 kann auch mittels des dargestellten zweiten Ausführungsbeispiels der erfindungsgemässen Vorrichtung hergestellt werden. Bei diesem Ausführungsbeispiel sind anstelle einer Nadelwalze 1 eine Nadelplatte 101 mit Nadeln 111 und anstelle einer Lochwalze 2 eine Lochplatte 102 mit Löchern 121 vorhanden. Das Lochen und Verformen des Flächengebildes 3 erfolgt nicht kontinuierlich, sondern abschnittsweise. Ansonsten gilt das im Zusammenhang mit dem ersten Ausführungsbeispiel Gesagte.

### Figuren 6 bis 9

Als Ausführungsbeispiele von möglichen Nadeln sind hier eine Nadel 211 mit relativ dickem zylindrischem Schaft 212 und konvex geformter, vollständiger Spitze 213, eine Nadel 311 mit relativ dickem zylindrischem Schaft 312 und konvex geformter, flachgeschliffener Spitze 313, eine Nadel 411 mit relativ dünnem zylindrischem Schaft 412 und konvex geformter, vollständiger Spitze 413 sowie eine Nadel 511 mit relativ dickem zylindrischem Schaft 512 und konvex geformter, flachgeschliffener Spitze 513 dargestellt.

Daneben sind unzählige weitere Nadelformen denkbar. Wesentlich ist, dass die Nadeln, welche per Definition einen Schaft und eine Spitze umfassen, einen bestimmten Formbereich zum Formen des Lochrands aufweisen, so dass beim Lochen des Flächengebildes nicht die ganze Nadel mit dem Flächengebilde in Kontakt tritt.

### Figur 10

Die Nadeln können auf den Nadelelementen je nach Anwendung in bestimmten Mustern oder auch unregelmässig angeordnet werden. Dargestellt ist eine abgewickelte Oberfläche 601 eines Zylinderkörpers einer Nadelwalze mit Löchern 602 zum Verankern von Nadeln in einer Anordnung, wie sie beispielsweise zum Lochen und Verformen von Vliesstoffen für Slipeinlagen verwendet wird.

Zu den vorbeschriebenen Vorrichtungen zum Lochen und Verformen eines Flächengebildes sind weitere konstruktive Variationen realisierbar. Hier ausdrücklich erwähnt seien noch:
- Anstatt Walzenpaare 1, 2 bzw. Plattenpaare 101, 102 für bestimmte Temperaturbereiche auszulegen, wäre es prinzipiell auch denkbar, diese durch geeignete Materialwahl so auszubilden, dass sie sich bei einer Temperaturerhöhung gleichermassen dehnen und so in allen relevanten Temperaturbereichen verwendbar sind.
- Zum Aufhängen und Bewegen der Nadelwalze 1 und Lochwalze 2 bzw. Nadelplatte 101 und Lochplatte 102 sind viele unterschiedliche Varianten denkbar. Wichtig ist vor allem, dass ihre gegenseitige Ausrichtung während des Lochens und Verformens stimmt.

## Patentansprüche

1. Vorrichtung zum Lochen und Verformen eines Flächengebildes (3), mit einem eine Vielzahl von Nadeln (11; 111; 211; 311; 411; 511) aufweisenden Nadelelement (1; 101) und einem Gegenelement (2; 102), das eine Vielzahl von Löchern (21; 121) zur Aufnahme von Nadeln (11; 111; 211; 311; 411; 511) des Nadelelements (1; 101) aufweist, so dass während des Lochens und Verformens jede Nadel (11; 111; 211; 311; 411; 511) im Loch- und Verformbereich in ein Loch (21; 121) des Gegenelements (2; 102) eintaucht, wobei jede Nadel (11; 111; 211; 311; 411; 511) einen Formbereich mit einer Umfangsfläche aufweist, zwischen der und der zu ihr benachbarten Innenfläche des jeweiligen Lochs (21; 121) des Gegenelements (2; 102) der während des Lochens und Verformens des Flächengebildes (3) entstehende Lochrand (32) am Flächengebilde (3) in kontrollierter Weise geformt wird, **dadurch gekennzeichnet, dass** die Löcher (21; 121) sich zumindest bis zu einer gewissen Tiefe von ihrer Mündung her zum Innern des Gegenelements (2; 102) hin zumindest annähernd konisch verjüngen.

2. Vorrichtung nach Anspruch 1, **dadurch gekennzeichnet, dass** das Nadelelement (1; 101) und das Gegenelement (2; 102) derart ausgebildet und gelagert sind, dass nach deren Erhitzen auf die zum Lochen und Verformen des Flächengebildes (3) benötigte Temperatur während des Lochens und Verformens jede Nadel (11; 111; 211; 311; 411; 511) im Loch- und Verformbereich in ein Loch (21; 121) des Gegenelements (2; 102) eintaucht.

3. Vorrichtung nach Anspruch 1 oder 2, **dadurch gekennzeichnet, dass** das Nadelelement (1; 101) und das Gegenelement (2; 102) mindestens eine Nadel (11; 111; 211; 311; 411; 511) bzw. ein Loch (21; 121) pro 10 cm² aufweisen.

4. Vorrichtung nach einem der Ansprüche 1 bis 3, **dadurch gekennzeichnet, dass** bei jeder Nadel (11; 111; 211; 311; 411; 511) die Umfangsfläche im Formbereich ungefähr parallel zur Innenfläche des jeweiligen Lochs (21; 121) des Gegenelements (2; 102) ist, in das sie während des Lochens und Verformens eingeführt ist.

5. Vorrichtung nach einem der Ansprüche 1 bis 4, **dadurch gekennzeichnet, dass** die Tiefe des Eindringens der Nadeln (11; 111; 211; 311; 411; 511) in die Löcher (21; 121) einstellbar ist.

6. Vorrichtung nach einem der Ansprüche 1 bis 5, **dadurch gekennzeichnet, dass** das Gegenelement (2; 102) aus Gummi oder Metall und das Nadelelement (1; 101) aus Metall ist, wobei die Nadeln (11; 111; 211; 311; 411; 511) vorzugsweise aus gehärtetem Stahl sind.

7. Vorrichtung nach einem der Ansprüche 1 bis 6, **dadurch gekennzeichnet, dass** das Nadelelement eine Nadelwalze (1) und das Gegenelement eine Lochwalze (2) ist.

8. Vorrichtung nach Anspruch 7, **dadurch gekennzeichnet, dass** sie Mittel zum synchronisierten Rotieren der Nadelwalze (1) und der Lochwalze (2) aufweist.

9. Vorrichtung nach einem der Ansprüche 1 bis 6, **dadurch gekennzeichnet, dass** das Nadelelement eine Nadelplatte (101) und das Gegenelement eine Lochplatte (102) ist.

10. Vorrichtung nach einem der Ansprüche 1 bis 9, **dadurch gekennzeichnet, dass** sie so ausgebildet ist, dass das Flächengebilde (3) während des Lochens und Verformens am Gegenelement (2; 102) anliegt, und ein die Nadeln (11; 111; 211; 311; 411; 511) tragender Grundkörper (12) des Nadelelements (1; 101) derart vom Gegenelement (2; 102) beabstandet ist, dass der Grundkörper (12) während des Lochens und Verformens vom Flächengebilde (3) beabstandet ist.

11. Vorrichtung nach Anspruch 10, **dadurch gekennzeichnet, dass** der Abstand zwischen dem Grundkörper (12) des Nadelelements (1; 101) und dem Gegenelement (2; 102) einstellbar ist.

12. Vorrichtung nach einem der Ansprüche 1 bis 11, **dadurch gekennzeichnet, dass** die Nadeln (11; 111; 211; 311; 411; 511) einen im wesentlichen zylinderförmigen Schaft (212; 312; 412; 512) und eine kegelförmige oder konvex geformte Spitze (213; 313; 413; 513) aufweisen und vorzugsweise rotationssymmetrisch sind.

13. Vorrichtung nach Anspruch 12, **dadurch gekennzeichnet, dass** der vorderste Teil der Spitze (313; 513) der Nadeln (311; 511) flachgeschliffen oder flachgeschliffen und trovalisiert ist.

14. Vorrichtung nach einem der Ansprüche 1 bis 13, **dadurch gekennzeichnet, dass** sie Mittel zum Heizen der Nadeln (11; 111; 211; 311; 411; 511) aufweist.

15. Verfahren zum Lochen und Verformen eines Flächengebildes (3) mit einer Vorrichtung nach einem der Ansprüche 1 bis 14, die ein eine Vielzahl von Nadeln (11; 111; 211; 311; 411; 511) aufweisendes Nadelelement (1; 101) und ein Gegenelement (2; 102) mit einer Vielzahl von Löchern (21; 121) zur Aufnahme von Nadeln (11; 111; 211; 311; 411; 511) des Nadelelements (1; 101) umfasst, wobei die Nadeln (11; 111; 211; 311; 411; 511) im Loch- und Verformbereich jeweils in ein Loch (21; 121) des Gegenelements (2; 102) eingeführt werden und dabei das Flächengebilde (3) lochen und gleichzeitig zwischen einer Umfangsfläche eines Formbereichs jeder Nadel (11; 111; 211; 311; 411; 511) und der zu ihr benachbarten Innenfläche des jeweiligen Lochs (21; 121) des Gegenelements (2; 102) der jeweilige Lochrand (32) am Flächengebilde (3) in kontrollierter Weise geformt wird.

16. Verfahren nach Anspruch 15, **dadurch gekennzeichnet, dass** die Nadeln (11; 111; 211; 311; 411; 511) während des Lochens und Verformens geheizt werden.

## Claims

1. An apparatus for perforating and deforming a sheet-like structure (3), having a needle element (1; 101) with a large number of needles (11; 111; 211; 311; 411; 511) and having a mating element (2; 102) which has a large number of holes (21; 121) to accommodate needles (11; 111; 211; 311; 411; 511) of the needle element (1; 101), so that during the perforating and deforming operations each needle (11; 111; 211; 311; 411; 511) in the perforating and deforming area penetrates into a hole (21; 121) in the mating element (2; 102), wherein each needle (11; 111; 211; 311; 411; 511) has a shaping area with a circumferential face between which and the inner face adjacent to it of the respective hole (21; 121) in the mating element (2; 102), the edge (32) of the hole produced on the sheet-like structure (3) during the perforation and deformation of the sheet-like structure (3) is shaped in a controlled manner, **characterized in that** the holes (21; 121) taper at least approximately conically from their opening toward the interior of the mating element (2; 102), at least down to a certain depth.

2. The apparatus as claimed in claim 1, **characterized in that** the needle element (1; 101) and the mating element (2; 102) are formed and mounted such that after they have been heated to the temperature needed to perforate and deform the sheet-like structure (3), during the perforating and deforming operations each needle (11; 111; 211; 311; 411; 511) in the perforating and deforming area penetrates into a hole (21; 121) in the mating element (2; 102).

3. The apparatus as claimed in claim 1 or 2, **characterized in that** the needle element (1; 101) and the mating element (2; 102) have at least one needle (11; 111; 211; 311; 411; 511) or one hole (21; 121) respectively per 10 cm².

4. The apparatus as claimed in one of claims 1 to 3, **characterized in that** in the case of each needle (11; 111; 211; 311; 411; 511), the circumferential face in the shaping area is approximately parallel to the inner face of the respective hole (21; 121) in the mating element (2; 102) into which it is inserted during the perforating and deforming operations.

5. The apparatus as claimed in one of claims 1 to 4, **characterized in that** the depth of penetration of the needles (11; 111; 211; 311; 411; 511) into the holes (21; 121) is adjustable.

6. The apparatus as claimed in one of claims 1 to 5, **characterized in that** the mating element (2; 102) is made of rubber or metal and the needle element (1; 101) is made of metal, the needles (11; 111; 211; 311; 411; 511) preferably being made of hardened steel.

7. The apparatus as claimed in one of claims 1 to 6, **characterized in that** the needle element is a needle roll (1) and the mating element is a perforated roll (2).

8. The apparatus as claimed in claim 7, **characterized in that** it has means to rotate the needle roll (1) and the perforated roll (2) synchronously.

9. The apparatus as claimed in one of claims 1 to 6, **characterized in that** the needle element is a needle plate (101) and the mating element is a perforated plate (102).

10. The apparatus as claimed in one of claims 1 to 9, **characterized in that** it is constructed in such a way that during the perforating and deforming operations, the sheet-like structure (3) rests on the mating element (2; 102), and a basic body (12) of the needle element (1; 101), bearing the needles (11; 111; 211; 311; 411; 511), is spaced apart from the mating element (2; 102) in such a way that during the perforating and deforming operations, the basic body (12) is spaced apart from the sheet-like structure (3).

11. The apparatus as claimed in claim 10, **characterized in that** the distance between the basic body (12) of the needle element (1; 101) and the mating element (2; 102) is adjustable.

12. The apparatus as claimed in one of claims 1 to 11, **characterized in that** the needles (11; 111; 211; 311; 411; 511) have an essentially cylindrical shank (212; 312; 412; 512) and a conical or convexly shaped tip (213; 313; 413; 513) and are preferably rotationally symmetrical.

13. The apparatus as claimed in claim 12, **characterized in that** the foremost part of the tip (313; 513) of the needles (311; 511) is ground flat or ground flat with rounded off edges.

14. The apparatus as claimed in one of claims 1 to 13, **characterized in that** it has means for heating the needles (11; 111; 211; 311; 411; 511).

15. A method of perforating and deforming a sheet-like structure (3) with an apparatus as claimed in one of claims 1 to 14, which comprises a needle element (1; 101) having a large number of needles (11; 111; 211; 311; 411; 511) and a mating element (2; 102) having a large number of holes (21; 121) to accommodate needles (11; 111; 211; 311; 411; 511) of the needle element (1; 101), wherein the needles (11; 111; 211; 311; 411; 511) in the perforating and deforming area are each inserted into a hole (21; 121) in the mating element (2; 102) and perforate the sheet-like structure (3) in the process and, at the same time, the respective edge (32) of the hole on the sheet-like structure (3) is shaped in a controlled way between a circumferential face of a shaping area of each needle (11; 111; 211; 311; 411; 511) and the inner face adjacent to it of the respective hole (21; 121) in the mating element (2; 102).

16. The method as claimed in claim 15, **characterized in that** the needles (11; 111; 211; 311; 411; 511) are heated during the perforating and deforming operations.

## Revendications

1. Dispositif pour perforer et déformer une structure plane (3), comportant un élément porte-aiguilles (1;101) comportant une multiplicité d'aiguilles (11;111; 211;311;411;511) et un élément antagoniste (2;102), qui comporte une multiplicité de trous (21;121) pour la réception d'aiguilles (11;111;211;311;411;511) de l'élément porte-aiguilles (1;101) de sorte que pendant la perforation et la déformation, chaque aiguille (11;111;211;311;411;511) dans la zone de perforation et de déformation pénètre dans un trou (21;121) de l'élément antagoniste (2;102), et dans lequel chaque aiguille (11;111;211;311;411;511) possède une zone de mise en forme possédant une surface périphérique, et entre cette surface et la surface intérieure, qui en est voisine, du trou respectif (21;121) de l'élément antagoniste (2;102), le bord (32) du trou, qui apparaît pendant la perforation et la déformation de la structure plane (3), est formé d'une manière contrôlée dans la structure plane (3), **caractérisé en ce que** les trous (21;121) se rétrécissent avec une forme au moins approximativement conique, au moins jusqu'à une certaine profondeur, depuis leur embouchure en direction de l'intérieur de l'élément antagoniste (2;102).

2. Dispositif selon la revendication 1, **caractérisé en ce que** l'élément porte-aiguilles (1;101) et l'élément antagoniste (2;102) sont agencés et montés de telle sorte qu'après leur chauffage les amenant à la température nécessaire pour la perforation et la déformation de la structure plane (3), chaque aiguille (11;111;211;311;411; 511) dans la zone de perforation et de déformation pénètre pendant la perforation et la déformation dans un trou (21; 121) de l'élément antagoniste (2;102).

3. Dispositif selon la revendication 1 ou 2,
**caractérisé en ce que** l'élément porte-aiguilles (1;101) et l'élément antagoniste (2;102) comportent au moins une aiguille (11;111;211;311;411;511) ou un trou (21;121) pour chaque 10 cm².

4. Dispositif selon l'une des revendications 1 à 3, **caractérisé en ce que** pour chaque aiguille (11;111;211; 311;411;511), la surface périphérique dans la zone de mise en forme est approximativement parallèle à la surface intérieure du trou respectif (21;121) de l'élément antagoniste (2;102), dans lequel l'aiguille est introduite pendant la perforation et la déformation.

5. Dispositif selon l'une des revendications 1 à 4, **caractérisé en ce que** la profondeur de la pénétration des aiguilles (11;111;211;311;411;511) dans les trous (21;121) est réglable.

6. Dispositif selon l'une des revendications 1 à 5, **caractérisé en ce que** l'élément antagoniste (2;102) est réalisé en caoutchouc ou en un métal et que l'élément porte-aiguilles (1;101) est réalisé en un métal, les aiguilles (11;111;211;311;411;511) étant réalisées de préférence en acier trempé.

7. Dispositif selon l'une des revendications 1 à 6, **caractérisé en ce que** l'élément porte-aiguilles est un rouleau à aiguilles (1) et l'élément antagoniste est un rouleau perforé (2).

8. Dispositif selon la revendication 7, **caractérisé en ce qu'**il comporte des moyens pour réaliser la rotation synchronisée du rouleau à aiguilles (1) et du rouleau perforé (2).

9. Dispositif selon l'une des revendications 1 à 6, **caractérisé en ce que** l'élément porte-aiguilles est une plaque à aiguilles (101) et l'élément antagoniste est une plaque perforée (102).

10. Dispositif selon l'une des revendications 1 à 9, **caractérisé en ce qu'**il est agencé de telle sorte que la structure plane (3) est appliquée, pendant la perforation et la déformation, contre l'élément antagoniste (2;102), et qu'un corps de base (12), qui porte les aiguilles (11;111; 211;311;411;511) de l'élément porte-aiguilles (1;101), est distant de l'élément antagoniste (2;102) tel que le corps de base (12) est distant de la structure plane (3) pendant la perforation et la déformation.

11. Dispositif selon la revendication 10, **caractérisé en ce que** la distance entre le corps de base (12) de l'élément porte-aiguille (1;101) et l'élément antagoniste (2;102) est réglable.

12. Dispositif selon l'une des revendications 1 à 11, **caractérisé en ce que** les aiguilles (11;111;211;311; 411;511) possèdent une tige de forme sensiblement cylindrique (212;312;412;512) et une pointe de forme conique ou convexe (213;313;413;513) et présentent de préférence une symétrie de révolution.

13. Dispositif selon la revendication 12, **caractérisé en ce que** la partie la plus avancée de la pointe (313;513) des aiguilles (311;511) est rectifiée ou est rectifiée et trovalisée.

14. Dispositif selon l'une des revendications 1 à 13, **caractérisé en ce qu'**il comporte des moyens pour chauffer les aiguilles (11;111;211;311;411;511).

15. Procédé pour perforer et déformer une structure plane (3) avec un dispositif selon l'une des revendications 1 à 14, qui comprend un élément porte-aiguilles (1;101) comprenant une multiplicité d'aiguilles (11;111;211;311;411;511) et un élément antagoniste (2;102) comportant une multiplicité de trous (21;121) pour la réception d'aiguilles (11;111;211;411;511) de l'élément porte-aiguilles (1;101), dans lequel les aiguilles (11;111;211;311;411;511) dans la zone de perforation et de déformation sont introduites dans des trous respectifs (21;121) de l'élément antagoniste (2;102) et perforent la structure plane (3), et simultanément entre une surface périphérique d'une zone de mise en forme de chaque aiguille (11;111;211;311;411;511) et la surface intérieure, qui en est voisine, du trou respectif (21;121) de l'élément antagoniste (2;102), le bord respectif (32) du trou dans la structure plane (3) est formé d'une manière contrôlée.

16. Procédé selon la revendication 15, **caractérisé en ce que** les aiguilles (11;111;211;311;411;511) sont chauffées pendant la perforation et la déformation.
